# EUROPEAN PATENT SPECIFICATION

(11) **EP 2 034 840 B1**
(45) Date of publication and mention of the grant of the patent: **01.06.2011**
(21) Application number: 07768164.1
(22) Date of filing: 28.06.2007
(51) Int. Cl.: A01N 53/00, A01N 59/00, A01N 25/12, B32B 27/32

(54) **PESTICIDAL COMPOSITION COMPRISING TETRAFLUOROBENZYL CYCLOPROPANE CARBOXYLATES**
PESTIZIDE ZUSAMMENSETZUNG UMFASSEND TETRAFLUORBENZYLCYCLOPROPANCARBOXYLATE
COMPOSITION PESTICIDE COMPRENANT DES CARBOXYLATES DE TETRAFLUOROBENZYL CYCLOPROPANE

(30) Priority: 29.06.2006 JP 2006179406; 05.10.2006 JP 2006273910; 29.03.2007 JP 2007086976
(43) Date of publication of application: 18.03.2009
(73) Proprietor: Sumitomo Chemical Company, Limited, Tokyo 104-8260 (JP)
(72) Inventor: NAKAMURA, Eizo, Hiratsuka-shi, Kanagawa 254-0805 (JP); FUKUDA, Minoru, Ibaraki 305-0051 (JP); MATSUMOTO, Shunichi, Ushiku-shi, Ibaraki 300-1221 (JP); WATANABE, Keisuke, Ashiya-shi, Hyogo 659-0015 (JP)
(74) Representative: Vossius & Partner
(86) International application number: PCT/JP2007/063413
(87) International publication number: WO 2008/001946

(56) References cited:
- EP-A- 0 060 617
- EP-A- 0 939 073
- EP-A- 1 004 569
- WO-A-94/15468
- WO-A-2005/121194
- JP-A- 10 072 301
- JP-A- 2002 234 804
- US-A- 4 923 897
- KNOWLES ALAN: "Chemistry and Technology of Agrochemical Formulations -1st Edition" December 1998 (1998-12), SPRINGER-VERLAG GMBH , XP009099359 page 43 - page 44

## Description

The present invention relates to a pesticidal composition, particularly a pesticidal composition suitable for controlling flying insects such as mosquitoes and unpleasant insects, and a method for controlling pests.

In general, a strategy for controlling insects is necessary for gardening work or outdoor work, for example, in grassland, forest or waterside. In particular, since a site bitten by a mosquito has itching, it is desirable to effectively eliminate mosquitoes from outdoor work environment. Arthropods including flying insects attracted to light and other insects give many people unpleasant feelings even though they are not substantially harmful. Thus, when people spend a given time outdoor, for example, for outdoor events or recreation, it is desirable to effectively eliminate the arthropods at least for a given length of time.

For killing or repelling these pests, a mosquito coil, a mosquito mat as well as a liquid agent as a.substitute for them have been conventionally used. In recent years, as a new method for killing or repelling pests, a method for controlling outdoor flying pests which comprises applying a pyrethroid compound supported on a carrier to a solid phase surface in the environment has been proposed (JP-A 2002-239809).

An object of the present invention is to overcome the problems of the prior art, and provide a drug composition capable of controlling pests, particularly flying insects such as mosquitoes or unpleasant insects, or arthropods other than insects, in a certain extent of an area.

The present invention provides the following pesticidal compositions and methods for controlling pests. [1] A pesticidal composition comprising at least an ester compound represented by the formula (1): 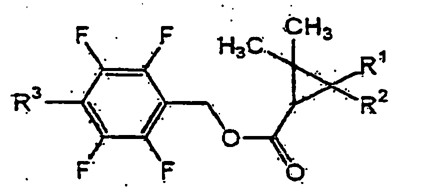
wherein R¹ represents a hydrogen atom or a methyl group, R² represents a methyl group or a group represented by the formula -CH=CR²¹R²² (wherein R²¹ and R²² independently represent a hydrogen atom, a methyl group or a chlorine atom), and R³ represents a hydrogen atom, a methyl group or a methoxymethyl group, supported on a carrier having an oil absorbency of not more than 10 ml/100 g.
[2] The pesticidal composition according to the above [1], which further comprises a pesticidal compound.
[3] The pesticidal composition according to the above [1] or 2, wherein the carrier is a particle with a particle diameter of 0.1 to 10 mm.
[4] The pesticidal composition according to any one of the above[1] to [3], wherein the ester compound is supported on the carrier in the proportion of 0.001 to 5 parts by weight of the ester compound to 100 parts by weight of the carrier.
[5] The pesticidal composition according to any one of the above [1] to [4], wherein the carrier is an inorganic substance.
[6] The pesticidal composition according to the above [5], wherein the inorganic substance is particulate calcium carbonate.
[7] The pesticidal composition according to the-above [5], wherein the inorganic substance is silica.
[8] The pesticidal composition according to any one of the above [1] to [7], wherein the ester compound is 2,3,5,6-tetrafluoro-4-methoxymethylbenzyl 3-(1-propenyl)-2,2-dimethylcyclopropanecarboxylate.
[9] A packed pesticidal composition, wherein the pesticidal composition according to any one of the above [1] to [8] is packed into a package having an interior surface made of a film of an ethylene-vinyl alcohol copolymer or polyacrylonitrile.
[10] A method for controlling pests which comprises applying an effective amount of the pesticidal composition according to any one of the above [1] to [8] to an outdoor area.
[11] The method for controlling pests according to the above [10], wherein the application amount is 1 to 150 g per 1 m².
   The pesticidal composition of the present invention can be used at a normal temperature, and does not need a volatilization device such as a heat source or a fan. The pesticidal composition of the present invention has an excellent effect of controlling pests in a certain extent of a plane (and a space above the.plane). Since a carrier used in the present invention contains as the main component a substance which is originally present in the natural environment or which is rapidly degraded and therefore is not a burden on the environment, the pesticidal composition of the present invention has little influence on the human body and the environment.
   The present pesticidal composition contains at least an ester compound represented by the following formula (1): 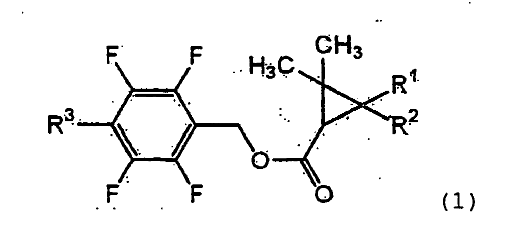 and a carrier having an oil absorbency of not more than 10 ml/100 g.

In the above formula (1), R¹ represents a hydrogen atom or a methyl group, R² represents a methyl group or a group represented by the formula -CH=CR²¹R²² (wherein R²¹ and R²² independently represent a hydrogen atom, a methyl group or a chlorine atom), and R³ represents a hydrogen atom, a methyl group or a methoxymethyl group.

The ester compound represented by the formula (1) is a compound described in EP0060617, USP-6225495, USP-6294576 or JP-A 7-17916, and can be produced by a method described, for example, in the above publications.

The ester compound represented by the formula (1) may have isomers based on an asymmetric carbon or isomers based on a carbon-carbon double bond. Any of active isomers can be used in the present invention.

Examples of the ester compound include 2,3,5,6-tetrafluoro-4-methoxymethylbenzyl 3-(1-propenyl)-2,2-dimethylcyclopropanecarboxylate, 2,3,5,6-tetrafluoro-4-methylbenzyl 3-(1-propenyl)-2,2-dimethylcyclopropanecarboxylate, 2,3,5,6-tetrafluoro-9-methoxymethylbenzyl 3-(2-methyl-1-propenyl)-2,2-dimethylcyclopropanecarboxylate, 2,3,5,6-tetrafluoro-4-methoxymethylbenzyl 2,2,3,3-tetramethylcyclopropanecarboxylate, 2,3,5,6-tetrafluoro-9-methylbenzyl 2,2,3-trimethylcyclopropanecarboxylate, 2,3,5,6-tetrafluorobenzyl 3-(2,2-dichlorovinyl)-2,2-dimethylcyclopropanecarboxylate, 2,3,5,6-tetrafluoro-4-methoxymethylbenzyl 1R-trans-3-(1-propenyl)-2,2-dimethylcyclopropanecarboxylate, 2,3,5,6-tetrafluoro-4-methylbenzyl 1R-trans-3-(1-propenyl)-2,2-dimethylcyclopropanecarboxylate, 2,3,5,6-tetrafluoro-4-methoxymethylbenzyl 1R-trans-3-(2-methyl-1-propenyl)-2,2-dimethylcyclopropanecarboxylate, 2,3,5,6-tetrafluoro-4-methylbenzyl 1R-trans-2,2,3-trimethylcyclopropanecarboxylate, 2,3,5,6-tetrafluorobenzyl 1R-trans-3-(2,2-dichlorovinyl)-2,2-dimethylcyclopropanecarboxylate, 2,3,5,6-tetrafluoro-4-methoxymethylbenzyl 1R-trans-3-(1-propenyl(E/Z=1/8))-2,2-dimethylcyclopropanecarboxylate (hereinafter, referred to as Compound A in some cases) and 2,3,5,6-tetrafluoro-4-methylbenzyl 1R-trans-3-(1-propenyl(E/Z=1/8))-2,2-dimethylcyclopropanecarboxylate.

The Compound A has a vapor pressure of 1.96 x 10⁻³ Pa at 25°C, which is relatively high for a pyrethroid compound. In addition, the Compound A is stable in various general-use solvents such as acidic or alkaline aqueous solutions. Further, stability under solar light is important for outdoor use of a compound, and the Compound A is shown to be very stable even under solar light.

The carrier used in the present invention is a solid, and has an oil absorbency of not more than 10 ml/100 g. Herein, oil absorbency is defined as the total addition amount of a linseed oil when a linseed oil is added dropwise to a sample until a linseed oil is no longer absorbed by the sample (see JIS K-5101).

The carrier used in the present invention is preferably particulate. The particle diameter is preferably 0.1 to 10 mm, more preferably 0.3 to 5 mm, particularly preferably 0.5 to 3 mm.

The carrier used in the present invention may be an inorganic substance or an organic substance. Examples of a preferable inorganic solid carrier include granule soils for gardening derived from volcanic rocks or metamorphic rocks, porcelain stone particles, and inorganic salts such as calcium carbonate, and particularly, KagaLite which is conventionally used for gardening, IshikawaLite which is conventionally used for gardening or as interior wall-finishing material, Izu silica stone which is well known as a material used for lightweight aerated concrete, and pearlite. As the carrier, a commercially available raw material may be used as it is, or may be crushed, ground and sieved and then used. Izu silica stone is a silica stone produced from Izu silica mine at Ukusu (the west coast of the Izu peninsula), Nishiizu-cho, Kamo-gun, Shizuoka-ken, Japan. In the Izu silica mine, the base rock is composed of volcanic clastic rocks such as andesite, which underwent hydrothermal alteration induced by volcanic hot water, fumarolic gas, hot spring or the like. IshikawaLite and KagaLite are both a kind of pumice stone. Limestone or marble may be ground, adjusted to an appropriate particle diameter with a sieve, and then used as particulate calcium carbonate. Preferably, particulate calcium carbonate or ground silica is used as the carrier. Examples of the organic carrier include granulated sugar, biodegradable polylactic acid and polymer beads.

A method of making the ester compound represented by the formula (1) supported on the carrier is not particularly limited. For example, the ester compound represented by the formula (1) can be supported on the carrier by impregnating the carrier with the ester compound or a solution containing it, coating the carrier surface with the ester compound or a solution containing it, or spraying the ester compound or a solution containing it onto the carrier surface. The ester compound is contained in the pesticidal composition of the present invention preferably in the proportion of 0.001 to 5 parts by weight of the ester compound to 100 parts by weight of the carrier. Examples of a solvent which can be used for making a solution of the ester compound include alcohols such as methanol, ethanol, isopropyl alcohol, glycerin and polyethylene glycol, ketones such as acetone, methyl ethyl ketone and cyclohexanone, ethers such as tetrahydrofuran and dioxane, aliphatic hydrocarbons such as hexane, kerosene, paraffin, lanoline derivatives and petroleum benzin, esters such as ethyl acetate, nitriles such as acetonitrile, and the like. The solution may further contain a surfactant, and examples thereof include polyoxyethylene fatty acid alcohol ethers such as polyoxyethylene oleyl ether, polyoxyethylene alkyl allyl ethers such as polyoxyethylene nonyl phenyl ether, polyoxyethylene fatty acid esters, fatty acid glyceride, sorbitan fatty acid esters, polyvinyl alcohol, and the like.

The pesticidal composition of the present invention may further contain a pesticidal compound.

Examples of the pesticidal compound include pyrethroid compounds. Examples of the pyrethroid compound include:
allethrin; 3-allyl-2-methylcyclopenta-2-ene-4-one-1-yl dl-cis/trans-chrysanthemate,
dl·d-T80-allethrin; 3-allyl-2-methylcyclopenta-2-ene-4-one-1-yl d-cis/trans-chrysanthemate,
dl·d-T-allethrin; 3-allyl-2-methylcyclopenta-2-ene-4-one-1-yl d-trans-chrysanthemate,
d·d-T-allethrin; d-3-allyl-2-methylcyclopenta-2-ene-4-one-1-yl d-trans-chrysanthemate,
d·d-T80-prallethrin; d-2-methyl-4-oxo-3-propargylcyclopent-2-enyl d-cis/trans-chrysanthemate,
resmethrin; 5-benzyl-3-furylmethyl dl-cis/trans-chrysanthemate,
dl·d-T80-resmethrin; 5-benzyl-3-furylmethyl d-cis/trans-chrysanthemate,
empenthrin; 1-ethynyl-2-methylpent-2-enyl d-cis/trans-chrysanthemate,
terallethrin; 2-allyl-3-methyl-2-cyclopentene-1-one-4-yl-2,2,3,3-tetramethyl-cyclopropanecarboxylate,
phthalthrin; N-(3,4,5,6-tetrahydrophthalimide)-methyl dl-cis/trans chrysanthemate,
dl-d-T80-phthalthrin; N-(3,4,5,6-tetrahydrophthalimide)-methyl d-cis/trans-chrysanthemate,
furamethrin; 5-(2-propargyl)-3-furylmethyl chrysanthemate, permethrin; 3-phenoxybenzyl dl-cis/trans-2,2-dimethyl-3-(2,2-dichlorovinyl)cyclopropanecarboxylate,
phenothrin; 3-phenoxybenzyl d-cis/trans chrysanthemate, imiprothrin; 2,4-dioxo-1-(prop-2-ynyl)-imidazolidine-3-ylmethyl (1R)-cis/trans-chrysanthemate,
fenvalerate; α-cyano-3-phenoxybenzyl-2-(4-chlorophenyl)-3-methylbutyrate,
cypermethrin; α-cyano-3-phenoxybenzyl dl-cis/trans-3-(2,2-dichlorovinyl)-2,2-dimethylcyclopropanecarboxylate, cyphenothrin; α-cyano-3-phenoxybenzyl d-cis/trans-chrysanthemate,
etofenprox; 2-(4-ethoxyphenyl)-2-methylpropyl-3-phenoxybenzylether,
tefluthrin; 2,3,5,6-tetrafluoro-4-methylbenzyl-3-(2-chloro-3,3,3-trifluoro-1-propenyl)-2,2-dimethyl-1-cyclopropanecarboxylate,
fenpropathrin; α-cyano-3-phenoxybenzyl cis/trans-2,2,3,3-tetramethylcyclopropanecarboxylate, and
fenfluthrin; 2,3,4,5,6-pentafluorobenzyl-dl-cis/trans 3-(2,2-dichlorovinyl) 2,2-dimethyl-1-cyclopropanecarboxylate.

Examples of the pesticidal compound other than pyrethroid compounds include oxadiazole pesticides, neonicotinoid pesticides, carbamate pesticides and phenylpyrazole pesticides. An example of the oxadiazole pesticide includes methoxadiazone; 5-methoxy-3-(2-methoxyphenyl O-1,3,4-oxadiazole-2-(3H)-one. Examples of the neonicotinoid pesticide include:
imidacloprid; 1-(6-chloro-3-pyridylmethyl)-N-nitroimidazolidine-2-indeneamine,
acetamiprid; (E)N¹-[(6-chloro-3-pyridyl)methyl]-N²-cyano-N¹-methylactoamidine,
dinotefuran; (RS)-1-methyl-2-nitro-3-(tetrahydro-3-furylmethyl)guanidine,
clothianidin; (E)-1-(2-chloro-1,3-thiazol-6-ylmethyl)-3-methyl-2-nitroguanidine, and
thiamethoxam; 3-(2-chloro-1,3-thiazol-5-ylmethyl)-5-methyl-1,3,5-oxadiazin-4-ylidene(nitro)amine. An example of the carbamate pesticide includes propoxur. An example of the phenylpyrazole pesticide includes fipronil.

In order to enhance merchantability, the pesticidal composition of the present invention may also contain an animal or vegetable natural perfume, an artificial perfume such as hydrocarbon, alcohol, phenol, aldehyde, ketone, lactone, oxide or ester, a natural essential oil, another repellent compound and/or its repellent component. Examples of such compound include citral, citronellal, citronellol, eugenol, methyl eugenol, geraniol, cinnamicaldehyde, linarol, perillaaldehyde, nepetallic acid, methylheptenone, decyl aldehyde, myrcene, geraniol acetate, thymol, limonene, cineole, pinene, cymene, terpinenes, sabinene, elemene, cedrene, elemol, pidolol, cedrol, hinokitiol, thujaplicin, tropoloid, hinokitin, thujopsene, borneol, camphene, terpineol, terpinyl.ester, dipentene, phellandren, cineole, caryolefin, vanillin, furfural, furfuryl alcohol, pinocarveol, pinocarvone, myrtenol, verbenone, carvone, eudesmol, piperitone, thujene, fenchyl alcohol, methylanthranilate, bisabolene, bergaptol, nonyl aldehyde, nonyl alcohol, nootkatone, octyl aldehyde, linalyl acetate, geranyl acetate, nerolidol, ocimene, methyl anthranilate, indole, jasmone, neem, benzaldehyde, pulegone, camphor and N,N-diethyltoluamide, and isomers and/or derivatives thereof.

Besides the above-mentioned additional ingredients, various additives may be contained in the pesticidal composition of the present invention. For example, an antioxidant, a surfactant, an ultraviolet absorbing agent, or a pigment can be contained at an arbitrary ratio. In addition, loss of a drug due to volatilization can be fully suppressed by putting the pesticidal composition of the present invention into a package whose interior surface is made of an ethylene-vinyl alcohol copolymer or polyacrylonitrile, and then sealing the package.

The present invention includes a method for controlling pests which comprises applying the pesticidal composition to an outdoor area, thereby naturally volatilizing the ester compound represented by the formula (1) to control pests. The application amount of the pesticidal composition depends on climate condition such as air temperature, desired duration of pest control, the kind of a subject pest, the extent of a subject area and the like. Typically, the pesticidal composition retaining the ester compound represented by the formula (1) is applied in an amount of preferably 1 to 150 g, more preferably 5 to 100 g, further preferably 10 to 50 g per 1 m² of a subject area.

The subject pests of the pesticidal composition of the present invention include all pests for which pyrethroid compounds are effective, for example, sanitary pests and unpleasant pests. Examples of these pests include insects, such as Diptera such as fly, gadfly, mosquito, sandfly and chironomid, Hymenoptera such as bee and ant, Coleoptera such as leaf beetle, gold beetle, rove beetle, Drone beetle, and false blister beetle, Lepidoptera such as moth, and Hemiptera such as plant hopper, aphid and stink bug; and Crustacea, such as Isopoda such as wood louse; but are not limited to these arthropods.

### Examples

Hereinafter, the present invention will be illustrated in detail by Preparation Examples and Test Examples, which do not limit the present invention. In the following Examples, oil absorbency was measured by placing 100 g of a sample in an Erlenmeyer flask and then adding a linseed oil dropwise to the sample until adhesion to each other of particles became clear according to JIS K-5101, and defined as the total addition amount (ml) of a linseed oil.

### Example 1 (Preparation Example 1)

To 99.596 kg of ground particulate calcium carbonate (manufactured by Sankyo Seifun, particle diameter distribution: 0.3 to 0.5 mm; average particle diameter: 0.4 mm; oil absorption amount; 0.5 ml/100 g) was added 0.404 kg of a normal paraffin M (manufactured by Nippon Oil Corporation) solution containing 0.104 kg of Compound A (2,3,5,6-tetrafluoro-4-methoxymethylbenzyl 1R-trans-3-(1-propenyl(E/Z=1/8)-2,2-dimethylcyclopropanecarboxylate), mixed with a V-shaped mixer for 30 minutes, and then allowed to stand at room temperature for 1 hour to obtain the pesticidal composition (1) of the present invention wherein ground particulate calcium carbonate was impregnated with 0.1% by mass of Compound A.

### Example 2 (Preparation Example 2)

To 50 kg of the pesticidal composition (1) of the present invention obtained in Preparation Example 1 was further added 50 kg of ground particulate calcium carbonate, mixed with a V-shape mixing machine for 30 minutes, and then allowed to stand at room temperature for 2 hours to obtain the pesticidal composition (2) of the present invention wherein ground particulate calcium carbonate was impregnated with 0.05% by mass of Compound A.

### Example 3 (Preparation Example 3)

To 99.596 kg of ground particulate silica (manufactured by Tokai Kogyo Co., LTD., particle diameter distribution: 0.3 to 0.5 mm; average particle diameter: 0.4 mm; oil absorption amount: 5 ml/100 g) was added 0.404 kg of a normal paraffin M (manufactured by Nippon Oil Corporation) solution containing 0.104 kg of Compound A, mixed with a V-shape mixing machine for 30 minutes, and then allowed to stand at room temperature for 1 hour to obtain the pesticidal composition (3) of the present invention wherein ground particulate silica was impregnated with 0.1% by mass of Compound A.

### Example 4 (Preparation Example 4)

To 50 kg of the pesticidal composition (3) of the present invention obtained in Preparation Example 3 was further added 50 kg of ground particulate silica, mixed with a V-shape mixing machine for 30 minutes, and then allowed to stand at room temperature for 2 hours to obtain the pesticidal composition (4) of the present invention wherein ground particulate silica was impregnated.with 0.05% by mass of Compound A.

### Example 5 (Preparation Example 5)

To 99.596 kg of silica sand No. 5 (manufactured by Neolite Kosan, particle diameter distribution: 0.3 to 0.5 mm; average.particle diameter: 0.4 mm; oil absorption amount: 0.5 ml/100 g) was added 0.404 kg of a normal paraffin M (manufactured by Nippon Oil Corporation) solution containing 0.104 kg of Compound A, mixed with a V-shape mixing machine for 30 minutes, and then allowed to stand at room temperature for 1 hour to obtain the pesticidal composition (5) of the present invention wherein silica sand No.5 was impregnated with 0.1% by mass of Compound A.

### Example 6 (Preparation Example 6)

To 50 kg of the pesticidal composition (5) of the present invention obtained in Preparation Example 5 was further added 50 kg of silica sand No. 5, mixed with a V-shape mixing machine for 30 minutes, and then allowed to stand at room temperature for 2 hours to obtain the pesticidal composition (6) of the present invention wherein silica sand No. 5 was impregnated with 0.05% by mass of Compound A.

### Example 7 (Preparation Example 7)

To 0.5 kg of a pumice stone (manufactured by IshikawaLite, Industry Co., LTD.: IshikawaLite No. 3, particle diameter distribution: 0.6 to 1.2 mm; average particle diameter: 0.9 mm; oil absorption amount: 8 ml/100 g) was added 10 ml of Isoper M (manufactured by Exxon Mobil Corporation) solution containing.0.5 g of Compound A, and stirred well. After 0.5 kg of Ishikawalite No. 3 was further added and stirred well, the mixture was allowed to stand at room temperature for 3 hours to obtain the pesticidal composition (7) of the present invention wherein the pumice stone was impregnated with 0.05% by mass of Compound A.

### Example 8 (Preparation Example 8)

To 0.5 kg of a pumice stone (manufactured by IshikawaLite Industry Co., LTD.: IshikawaLite No. 6, particle diameter distribution: 0.25 to 0.10 mm; average particle diameter: 0.18 mm; oil absorption amount: 9 ml/100 g) was added 10 ml of Isoper M solution containing 0.5 g of Compound A, and stirred well. After 0.5 kg of IshikawaLite No. 6 was further added and stirred well, the mixture was allowed to stand at room temperature for 3 hours to obtain the pesticidal composition (8) of the present invention wherein the pumice stone was impregnated with 0.05% by mass of Compound A.

### Comparative Example 1 (Comparative Preparation.Example 1)

To 10 kg of ground particulate sepiolite (manufactured by Neolite Kosan, particle diameter distribution: 0.5 to 1.7 mm; average particle diameter: 1.1 mm; oil absorption amount: 35 ml/100 g) was added 0.015 kg of a normal paraffin M (manufactured by Nippon Oil Corporation) solution containing 5 g of Compound A, mixed with a V-shape mixing machine for 30 minutes, and then allowed to stand at room temperature for 3 hours to obtain the comparative pesticidal composition (1) wherein ground particulate sepiolite was impregnated with 0.05% by mass of Compound A.

### Example 9 (Test Example 1)

From a three-side-sealed bag (a flat bag whose bottom and both side parts are sealed, which becomes four-side-sealed after filling of a content) [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (1) obtained in Preparation Example 1, 10 g of the present pesticidal composition (1) was taken out, and applied uniformly onto a floor in a test chamber of about 0.34 m³ (bottom: 0.7 m x 0.7 m, height 0.7 m). After 5 minutes, 25 female imagoes of Aedes albopictus were released. After 30 minutes, the number of knocked down individuals of the tested Aedes albopictus was counted. As a result, all of 25 imagoes were knocked down.

### Example 10 (Test Example 2)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (2) obtained in Preparation Example 2, 10 g of the present pesticidal composition (2) was taken out, and applied uniformly onto a floor in a test chamber of about 0.34 m³ (bottom: 0.7 m x 0.7 m, height 0.7 m). After 5 minutes, 25 female imagoes of Aedes albopictus were released. After 30 minutes, the number of knocked down individuals of the tested Aedes albopictus was counted. As a result, all of 25 imagoes were knocked down.

### Example 11 (Test Example 3)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (3) obtained in Preparation Example 3, 10 g of the present pesticidal composition (3) was taken out, and applied uniformly onto a floor in a test chamber of about 0.34 m³ (bottom: 0.7 m x 0.7 m, height 0.7 m). After 5 minutes, 25 female imagoes of Aedes albopictus were released. After 30 minutes, the number of knocked down individuals of the tested Aedes albopictus was counted. As a result, all of 25 imagoes were knocked down.

### Example 12 (Test Example 4)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (4) obtained in Preparation Example 4, 10 g of the present pesticidal composition (4) was taken out, and applied uniformly onto a floor in a test chamber of about 0.34 m³ (bottom: 0.7 m x 0.7 m, height 0.7 m). After 5 minutes, 25 female imagoes of Aedes albopictus were released. After 30 minutes, the number of knocked down individuals of the tested Aedes albopictus was counted. As a result, all of 25 imagoes were knocked down.

### Example 13 (Test Example 5)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (5) obtained in Preparation Example 5, 10 g of the present pesticidal composition (5) was taken out, and applied uniformly onto a floor in a test chamber of about 0.34 m³ (bottom: 0.7 m x 0.7 m, height 0.7 m). After 5 minutes, 25 female imagoes of Aedes albopictus were released. After 30 minutes, the number of knocked down individual of the tested Aedes albopictus was counted. As a result, all of 25 imagoes were knocked down.

### Example 14 (Test Example 6)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (6) obtained in Preparation Example 6, 10 g of the present pesticidal composition (6) was taken out, and applied uniformly onto a floor in a test chamber of about 0.34 m³ (bottom: 0.7 m x 0.7 m, height 0.7 m). After 5 minutes, 25 female imagoes of Aedes albopictus were released. After 30 minutes, the number of knocked down individuals of the tested Aedes albopictus was counted. As a result, all of 25 imagoes were knocked down.

### Example 15 (Test Example 7)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (7) obtained in Preparation Example 7, 10 g of the present pesticidal composition (7) was taken out, and applied uniformly onto a floor in a test chamber of about 0.34 m³ (bottom: 0.7 m x 0.7 m, height 0.7 m). After 5 minutes, 25 female imagoes of Aedes albopictus were released. After 30 minutes, the number of knocked down individuals of the tested Aedes albopictus was counted. As a result, all of 25 imagoes were knocked down.

### Example 16 (Test Example 8)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (8) obtained in Preparation Example 8, 10 g of the present pesticidal composition (8) was taken out, and applied uniformly onto a floor in a test chamber of about 0.34 m³ (bottom: 0.7 m x 0.7 m, height 0.7 m). After 5 minutes, 25 female imagoes of Aedes albopictus were released. After 30 minutes, the number of knocked down individuals of the tested Aedes albopictus was counted. As a result, all of 25 imagoes were knocked down.

### Comparative Example 2 (Comparative Test Example 1)

Ten grams of the comparative pesticidal composition (1) obtained in Comparative Preparation Example was applied uniformly onto a floor in a test chamber of about 0.34 m³ (bottom: 0.7 m x 0.7 m, height 0.7 m). After 5 minutes, 25 female imagoes of Aedes albopictus were released. After 30 minutes, the number of knocked down individuals of the tested Aedes albopictus was counted. As a result, no imago was knocked down.

### Example 17 (Test Example 9)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (1) obtained in Preparation Example 1, 70 g of the present pesticidal composition (1) was taken out, and applied uniformly onto a floor in a test chamber of about 5.8 m³ (bottom: 1.8 m x 1.8 m, height 1.8 m). After 5 minutes, 25 female imagoes of Aedes albopictus were released. After 30 minutes, the number of knocked down individuals of the tested Aedes albopictus was counted. As a result, all of 25 imagoes were knocked down.

### Example 18 (Test Example 10)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (2) obtained in Preparation Example 2, 70 g of the present pesticidal composition (2) was taken out, and applied uniformly onto a floor in a test chamber of about 5.8 m³ (bottom: 1.8 m x 1.8 m, height 1.8 m). After 5 minutes, 25 female imagoes of Aedes albopictus were released. After 30 minutes, the number of knocked down individuals of the tested Aedes albopictus was counted. As a result, all of 25 imagoes were knocked down.

### Example 19 (Test Example 11)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (3) obtained in Preparation Example 3, 70 g of the present pesticidal composition (3) was taken out, and applied uniformly onto a floor in a test chamber of about 5.8 m³ (bottom: 1.8 m x 1.8 m, height 1.8 m). After 5 minutes, 25 female imagoes of Aedes albopictus were released. After 30 minutes, the number of knocked down individuals of the tested Aedes albopictus was counted. As a result, all of 25 imagoes were knocked down.

### Example 20 (Test Example 12)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (4) obtained in Preparation Example 4, 70 g of the present pesticidal composition (4) was taken out, and applied uniformly onto a floor in a test chamber of about 5.8 m³ (bottom: 1.8 m x 1.8 m, height 1.8 m). After 5 minutes, 25 female imagoes of Aedes albopictus were released. After 30 minutes, the number of knocked down individuals of the tested Aedes albopictus was counted. As a result, all of 25 imagoes were knocked down.

### Example 21 (Test Example 13)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (5) obtained in Preparation Example 5, 70 g of the present pesticidal composition (5) was taken out, and applied uniformly onto a floor in a test chamber of about 5.8 m³ (bottom: 1.8 m x 1.8 m, height 1.8 m). After 5 minutes, 25 female imagoes of Aedes albopictus were released. After 30 minutes, the number of knocked down individuals of the tested Aedes albopictus was counted. As a result, all of 25 imagoes were knocked down.

### Example 22 (Test Example 14)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (6) obtained in Preparation Example 6, 70 g of the present pesticidal composition (6) was taken out, and applied uniformly onto a floor in a test chamber of about 5.8 m³ (bottom: 1.8 m x 1.8 m, height 1.8 m). After 5 minutes, 25 female imagoes of Aedes albopictus were released. After 30 minutes, the number of knocked down individuals of the tested Aedes albopictus was counted. As a result, all of 25 imagoes were knocked down.

### Example 23 (Test Example 15)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (7) obtained in Preparation Example 7, 70 g of the present pesticidal composition (7) was taken out, and applied uniformly onto a floor in a test chamber of about 5.8 m³ (bottom: 1.8 m x 1.8 m, height 1.8 m). After 5 minutes, 25 female imagoes of Aedes albopictus were released. After 30 minutes, the number of knocked down individuals of the tested Aedes albopictus was counted. As a result, all of 25 imagoes were knocked down.

### Example 24 (Test Example 16)

From a three-side-sealed bag [size: 10 cm width x 14 cm length; interior surface: ethylene-vinyl alcohol copolymer film (thickness 30 micron); exterior surface: polyethylene terephthalate film (thickness 12 micron)] containing 100 g of the present pesticidal composition (8) obtained in Preparation Example 8, 70 g of the present pesticidal composition (8) was taken out, and applied uniformly onto a floor in a test chamber of about 5.8 m³ (bottom: 1.8 m x 1.8 m, height 1.8 m). After 5 minutes, 25 female imagoes of Aedes albopictus were released. After 30 minutes, the number of knocked down individuals of the tested Aedes albopictus was counted. As a result, all of 25 imagoes were knocked down.

### Comparative Example 3 (Comparative Test Example 2)

Seventy grams of the comparative pesticidal composition (1) obtained in Comparative Preparation Example was applied uniformly onto a floor in a test chamber of about 5.8 m³ (bottom: 1.8 m x 1.8 m, eight 1.8 m). After 5 minutes, 25 female imagoes of Aedes albopictus were released. After 30 minutes, the number of knocked down individuals of the tested Aedes albopictus was counted. As a result, no imago was knocked down.

### Example 25 (Test Example 17)

The pesticidal composition (1) of the present invention obtained in Preparation Example 1 was applied in an application amount of 25 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (1) of the present invention had not been applied, and then the number of bites by Aedes albopictus female imagoes was counted. As a result, when the pesticidal composition (1) of the present invention was not applied to a vegetable garden or lawn, all people who worked there had several mosquito bites of Aedes albopictus female imagoes. In contrast, when the pesticidal composition (1) of the present invention was applied to a vegetable garden or lawn, of 10 people who worked there 5 workers had no mosquito bite and the remaining 5 workers had only one or two mosquito bites.

### Example 26 (Test Example 18)

the pesticidal composition (1) of the present invention obtained in Preparation Example 1 was applied in an application amount of 50 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (1) of the present invention had not been applied, and then the number of bites by Aedes albopictus female imagoes was counted. As a result, when the pesticidal composition (1) of the present invention was not applied to a vegetable garden or lawn, all people who worked there had several mosquito bites of Aedes albopictus female imagoes. In contrast, when the pesticidal composition (1) of the present invention was applied to a vegetable garden or lawn, of 10 people who worked there 7 workers had no mosquito bite and the remaining 3 workers had only one or two mosquito bites.

### Example 27 (Test Example 19)

The pesticidal composition (1) of the present invention obtained in Preparation Example 1 was applied in an application amount of 75 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (1) of the present invention had not been applied, and then the number of bites by Aedes albopictus female imagoes was counted. As a result, when the pesticidal composition (1) of the present invention was not applied to a vegetable garden or lawn, all people who worked there had several mosquito bites of Aedes albopictus female imagoes. In contrast, when the pesticidal composition (1) of the present invention was applied to a vegetable garden or lawn, all 10 people who worked there had no mosquito bite.

### Example 28 (Test Example 20)

The pesticidal composition (2) of the present invention obtained in Preparation Example 2 was applied in an application amount of 25 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (2) of the present invention had not been applied, and then the number of bites by Aedes albopictus female imagoes was counted. As a result, when the pesticidal composition (2) of the present invention was not applied to a vegetable garden or lawn, all people who worked there had several mosquito bites of Aedes albopictus female imagoes. In contrast, when the pesticidal composition (2) of the present invention was applied to a vegetable garden or lawn, of 10 people who worked there 3 workers had no mosquito bite and the remaining 7 workers had only one or two mosquito bites.

### Example 29 (Test Example 21)

The pesticidal composition (2) of the present invention obtained in Preparation Example 2 was applied in an application amount of 50 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (2) of the present invention had not been applied, and then the number of bites by Aedes albopictus female imagoes was counted. As a result, when the pesticidal composition (2) of the present invention was not applied to a vegetable garden or lawn, all people who worked there had several mosquito bites of Aedes albopictus female imagoes. In contrast, when the pesticidal composition (2) of the present invention was applied to a vegetable garden or lawn, of 10 people who worked there 4 workers had no mosquito bite and the remaining 6 workers had only one or two mosquito bites.

### Example 30 (Test Example 22)

The pesticidal composition (2) of the present invention obtained in Preparation Example 2 was applied in an application amount of 75 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (2) of the present invention had not been applied, and then the number of bites by Aedes albopictus female imagoes was counted. As a result, when the pesticidal composition (2) of the present invention was not applied to a vegetable garden or lawn, all people who worked there had several mosquito bites of Aedes albopictus female imagoes. In contrast, when.the pesticidal composition (2) of the present invention was applied to a vegetable garden or lawn, of 10 people who worked there 8 workers had no mosquito bite and the remaining 2 workers had only one or two mosquito bites.

### Example 31 (Test Example 23)

The pesticidal composition (5) of the present invention obtained in Preparation Example 5 was applied in an application amount of 25 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (5) of the present invention had not been applied, and then the number of bites by Aedes albopictus female imagoes was counted. As a result, when the pesticidal composition (5) of the present invention was not applied to a vegetable garden or lawn, all people who worked there had several mosquito bites of Aedes albopictus female imagoes. In contrast, when the pesticidal composition (5) of the present invention was applied to a vegetable garden or lawn, of 10 people who worked there 3 workers had no mosquito bite and the remaining 7 workers had only one or two mosquito bites.

### Example 32 (Test Example 24)

The pesticidal composition (5) of the present invention obtained in Preparation Example 5 was applied in an application amount of 50 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (5) of the present invention had not been applied, and then the number of bites by Aedes albopictus female imagoes was counted. As a result, when the pesticidal composition (5) of the present invention was not applied to a vegetable garden or lawn, all people who worked there had several mosquito bites of Aedes albopictus female imagoes. In contrast, when the pesticidal composition (5) of the present invention was applied to a vegetable garden or lawn, of 10 people who worked there 3 workers had no mosquito bite and the remaining 7 workers had only one or two mosquito bites.

### Example 33 (Test Example 25)

The pesticidal composition (5) of the present invention obtained in Preparation Example 5 was applied in an application amount of 75 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (5) of the present invention had not been applied, and then the number of bites by Aedes albopictus female imagoes was counted. As a result, when the pesticidal composition (5) of the present invention was not applied to a vegetable garden or lawn, all people who worked there had several mosquito bites of Aedes albopictus female imagoes. In contrast, when the pesticidal composition (5) of the present invention was applied to a vegetable garden or lawn, of 10 people who worked there 8 workers had no mosquito bite and the remaining 2 workers had only one or two mosquito bites.

### Example 34 (Test Example 26)

The pesticidal composition (6) of the present invention obtained in Preparation Example 6 was applied in an application amount of 25 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (6) of the present invention had not been applied, and then the number of bites by Aedes albopictus female imagoes was counted. As a result, when the pesticidal composition (6) of the present invention was not applied to a vegetable garden or lawn, all people who worked there had several mosquito bites of Aedes albopictus female imagoes. In contrast, when the pesticidal composition (6) of the present invention was applied to a vegetable garden or lawn, of 10 people who worked there 3 workers had no mosquito bite and the remaining 7 workers had only one or two mosquito bites.

### Example 35 (Test Example 27)

The pesticidal composition (6) of the present invention obtained in Preparation Example 6 was applied in an application amount of 50 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (6) of the present invention had not been applied, and then the number of bites by Aedes albopictus female imagoes was counted. As a result, when the pesticidal composition (6) of the present invention was not applied to a vegetable garden or lawn, all people who worked there had several mosquito bites of Aedes albopictus female imagoes. In contrast, when the pesticidal composition (6) of the present invention was applied to a vegetable garden or lawn, of 10 people who worked there 4 workers had no mosquito bite and the remaining 6 workers had only one or two mosquito bites.

### Example 36 (Test Example 28)

The pesticidal composition (6) of the present invention obtained in Preparation Example 6 was applied in an application amount of 75 g/m² to 20 m² of a vegetable garden or a lawn which Aedes albopictus inhabited. After 10 workers spent about 5 hours at the vegetable garden or lawn, the number of bites by female imagoes of Aedes albopictus was counted. As a control, 10 workers spent about 5 hours at a vegetable garden or a lawn to which the pesticidal composition (6) of the present invention had not been applied, and then the number of bites by Aedes albopictus female imagoes was counted. As a result, when the pesticidal composition (6) of the present invention was not applied to a vegetable garden or lawn, all people who worked there had several mosquito bites of Aedes albopictus female imagoes. In contrast, when the pesticidal composition (6) of the present invention was applied to a vegetable garden or lawn, of 10 people who worked there 7 workers had no mosquito bite and the remaining 3 workers had only one or two mosquito bites.

### Comparative Examples (Comparative Test Example 3)

At 20 m² of a vegetable garden or a lawn which Aedes albopictus inhabited, 10 workers wearing a commercially available fan-type wristband-type portable insect repelling device spent about 5 hours, and then the number of bites by female imagoes of Aedes albopictus was counted. As a result, all workers had mosquito bites of Ades albopictus female imagoes on either of hands or foots.

### Example 37 (Test Example 29)

Seventy grams of the pesticidal composition (1) of the present invention obtained in Preparation Example 1 was uniformly applied onto a floor in a test chamber of about 5.8 m³ (bottom: 1.8 m x 1.8 m, height 1.8 m). After 5 minutes, 25 chironomid imagoes were released. After 30 minutes, the number of knocked down individuals of the tested chironomid imagoes was counted. As a result, all 25 imagoes were knocked down.

### Example 38 (Test Example 30)

Seventy grams of the pesticidal composition (2) of the present invention obtained in Preparation Example 2 was uniformly applied onto a floor in a test chamber of about 5.8 m³ (bottom: 1.8 m x 1.8 m, height 1.8 m). After 5 minutes, 25 chironomid imagoes were released. After 30 minutes, the number of knocked down individuals of the tested chironomid imagoes was counted. As a result, all 25 imagoes were knocked down.

### Example 39 (Test Example 31)

Seventy grams of the pesticidal composition (1) of the present invention obtained in Preparation Example 1 was uniformly applied onto a floor in a test chamber of about 5.8 m³ (bottom: 1.8 m x 1.8 m, height 1.8 m). After 5 minutes, a net bag (16 mesh, diameter 20 cm, height 30 cm) containing 30 Clogamia albipunctatus imagoes was suspended. After 120 minutes, the number of knocked down individuals of the tested Clogamia albipunctatus imagoes was counted. As a result, all 30 imagoes were knocked down.

### Example 40 (Test Example 32)

Seventy grams of the pesticidal composition (2) of the present invention obtained in Preparation Example 2 was uniformly applied onto a floor in a test chamber of about 5.8 m³ (bottom: 1.8 m x 1.8 m, height 1.8 m). After 5 minutes, a net bag (16 mesh, diameter 20 cm, height 30 cm) containing 30 Clogamia albipunctatus imagoes was suspended. After 120 minutes, the number of knocked down individuals of the tested Clogamia albipunctatus imagoes was counted. As a result, all 30 imagoes were knocked down.

### Example 41 (Test Example 33)

Seventy grams of the pesticidal composition (1) of the present invention described in Preparation Example 1 was uniformly applied onto a floor in a test chamber of about 5.8 m³ (bottom: 1.8 m x 1.8 m, height 1.8 m). After 5 minutes, a plastic ring was placed on the floor center, and 10 Formica japonica imagoes were released in the ring.' After 10 minutes, the number of knocked down individuals of the tested Formica japonica imagoes was counted. As a result, all 10 imagoes were knocked down.

### Example 42 (Test Example 34)

Seventy grams of the pesticidal composition (2) of the present invention described in Preparation Example 2 was uniformly applied onto a floor in a test chamber of about 5.8 m³ (bottom: 1.8 m x 1.8 m, height 1.8 m). After 5 minutes, a plastic ring was placed on the floor center, and 10 Formica japonica imagoes were released in the ring. After 10 minutes, the number of knocked down individuals of the tested Formica japonica imagoes was counted. As a result, all 10 imagoes were knocked down.

### Example 43 (Test Example 35)

Seventy grams of the pesticidal composition (1) of the present invention described in Preparation Example 1 was uniformly applied onto a floor in a test chamber of about 5.8 m³ (bottom: 1.8 m x 1.8 m, height 1.8 m). After 5 minutes, a plastic ring was placed on the floor center, and 10 pill bug imagoes were released in the ring. After 10 minutes, the number of knocked down individuals of the tested pill bug imagoes was counted. As a result, all 10 imagoes were knocked down.

### Example 44 (Test Example 36)

Seventy grams of the pesticidal composition (2) of the present invention described in Preparation Example 2 was uniformly applied onto a floor in a test chamber of about 5.8 m³ (bottom: 1.8 m x 1.8 m, height 1.8 m). After 5 minutes, a plastic ring was placed on the floor center, and 10 pill bug imagoes were released in the ring. After 10 minutes, the number of knocked down individuals of the tested pill bug imagoes was counted. As a result, all 10 imagoes were knocked down.

### Selection of carrier

Using various carries, pesticidal compositions containing Compound A were prepared as in the above Preparation Examples. Then effects of the compositions on a mosquito were examined indoor and outdoor. Table 1 shows results and the oil absorbency of used carriers. In Table 1, test examples using the carriers from calcium carbonate to Ishikawalite No. 6 are described in the above Examples. In other test examples, pesticidal compositions wherein carriers were impregnated with 0.05% by mass of Compound A were used. Symbols are as follows: "+++" indicates remarkable effect, "++" indicates significant effect, "+" indicates the possibility of effect, and "-" indicates no effect. Regarding stability, "++" indicates that the remaining rate of Compound A after a pesticidal composition was stored under sealed condition at 50°C for 3 weeks (the content of Compound A after 3 weeks/the content of Compound A at initiation of test) was not less than 50%.

**[Table 1]**

| Oil absorbency and effect of each carrier | | | | |
|---|---|---|---|---|
| | Oil absorbency (m/100 g) | Indoor Test Example | Outdoor Test Example | Stability |
| Calcium carbonate | 0.5 | +++ | +++ | ++ |
| Izu silica stone | 5 | +++ | ++ | ++ |
| Ishikawalite No.3 | 8 | +++ | ++ | ++ |
| Ishikawalite No.6 | 9 | +++ | ++ | ++ |
| Particulate silica sand | 0.5 | +++ | +++ | ++ |
| Ground particulate zeolite S | 48 | - | - | ++ |
| Ground particulate diatomaceous earth | 80 | - | - | ++ |
| Granulated diatomaceous earth | 60 | - | - | ++ |
| Attapulgite | 35 | - | - | ++ |
| Zeolite | 35 | - | - | ++ |
| Kagalite | 12 | + | - | ++ |
| Porcelain stone particle | 6 | +++ | ++ | ++ |

By applying a compound represented by the formula (1) supported on a carrier onto a solid phase surface in the natural environment, the effect of controlling pests.giving unpleasant feelings to humans, particularly, mosquito, chironomid, ant, wood louse, pill bug and sandfly was shown. The present invention can be utilized in various situations, for example, in agricultural or horticultural working, outdoor event, and recreation facility.

## Claims

1. A pesticidal composition comprising at least an ester compound represented by the formula (1): 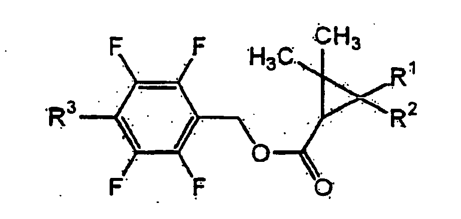 wherein R¹ represents a hydrogen atom or a methyl group, R² represents a methyl group or a group represented by the formula -CH=CR²¹R²² (wherein R²¹ and R²² independently represent a hydrogen atom, a methyl group or a chlorine atom), and R³ represents a hydrogen atom, a methyl group or a methoxymethyl group, supported on a carrier having an oil absorbency of not more than 10 ml/100 g.

2. The pesticidal composition according to claim 1, which further comprises a pesticidal compound.

3. The pesticidal composition according to claim 1, wherein the carrier is a particle with a particle diameter, of 0.1 to 10 mm.

4. The pesticidal composition according to any one of claims 1 to 3, wherein the ester compound is supported on the carrier in the proportion of 0.001 to 5 parts by weight of the ester compound to 100 parts by weight of the carrier.

5. The pesticidal composition according to any one of claims 1 to 3, wherein the carrier is an inorganic substance.

6. The pesticidal composition according to claim 5, wherein the inorganic substance is particulate calcium carbonate.

7. The pesticidal composition according to claim 5, wherein the inorganic substance is silica.

8. The pesticidal composition according to claim 1, wherein the ester compound is 2,3,5,6-tetrafluoro-4-methoxymethylbenzyl 3-(1-propenyl)-2,2-dimethylcyclopropanecarboxylate.

9. A packed pesticidal composition, wherein the pesticidal composition according to claim 1 is packed into a package having an interior surface made of a film of an ethylene-vinyl alcohol copolymer or polyacrylonitrile.

10. A method for controlling pests which comprises applying an effective amount of the pesticidal composition according to claim 1 to an outdoor area.

11. The method for controlling pests according to claim 10, wherein the application amount is 1 to 150 g per 1 m².

## Patentansprüche

1. Eine pestizide Zusammensetzung, umfassend mindestens eine Esterverbindung, dargestellt durch die Formel (1): 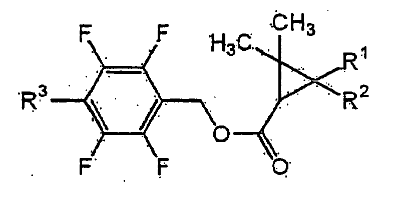 wobei R¹ ein Wasserstoffatom oder eine Methylgruppe darstellt, R² eine Methylgruppe oder einen Rest, dargestellt durch die Formel -CH=CR²¹R²², darstellt (wobei R²¹ und R²² unabhängig ein Wasserstoffatom, eine Methylgruppe oder ein Chloratom darstellen) und R³ ein Wasserstoffatom, eine Methylgruppe oder eine Methoxymethylgruppe darstellt, aufgebracht auf einem Träger, welcher ein Ölabsorptionsvermögen von nicht mehr als 10 ml/100 g aufweist.

2. Die pestizide Zusammensetzung gemäß Anspruch 1, welche ferner eine pestizide Verbindung umfasst.

3. Die pestizide Zusammensetzung gemäß Anspruch 1, wobei der Träger ein Teilchen mit einem Teilchendurchmesser von 0,1 bis 10 mm ist.

4. Die pestizide Zusammensetzung gemäß einem der Ansprüche 1 bis 3, wobei die Esterverbindung in dem Verhältnis von 0,001 bis 5 Gew.-Teilen der Esterverbindung zu 100 Gew.-Teilen des Trägers auf dem Träger aufgebracht ist.

5. Die pestizide Zusammensetzung gemäß einem der Ansprüche 1 bis 3, wobei der Träger eine anorganische Substanz ist.

6. Die pestizide Zusammensetzung gemäß Anspruch 5, wobei die anorganische Substanz teilchenförmiges Calciumcarbonat ist.

7. Die pestizide Zusammensetzung gemäß Anspruch 5, wobei die anorganische Substanz Siliciumdioxid ist.

8. Die pestizide Zusammensetzung gemäß Anspruch 1, wobei die Esterverbindung 2,3,5,6-Tetrafluor-4-methoxymethylbenzyl-3-(1-propenyl)-2,2-dimethylcyclopropancarboxylat ist.

9. Eine verpackte pestizide Zusammensetzung, wobei die pestizide Zusammensetzung gemäß Anspruch 1 in eine Verpackung verpackt ist, die eine innere Oberfläche aus einem Film eines Ethylen-Vinylalkoholcopolymers oder eines Polyacrylnitrils aufweist.

10. Ein Verfahren zur Schädlingsbekämpfung, welches das Aufbringen einer wirksamen Menge der pestiziden Zusammensetzung gemäß Anspruch 1 auf einen Bereich im Freien umfasst.

11. Das Verfahren zur Schädlingsbekämpfung gemäß Anspruch 10, wobei die aufgebrachte Menge 1 bis 150 g pro 1 m² beträgt.

## Revendications

1. Composition pesticide comprenant au moins un composé d'ester représenté par la formule (1) : 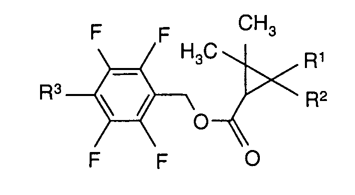 dans laquelle R¹ représente un atome d'hydrogène ou un groupe méthyle, R² représente un groupe méthyle ou un groupe représenté par la formule -CH=CR²¹R²² (où R²¹ et R²² représentent indépendamment un atome d'hydrogène, un groupe méthyle ou un atome de chlore), et R³ représente un atome d'hydrogène, un groupe méthyle ou un groupe méthoxyméthyle, mis sur un support présentant une capacité d'absorption d'huile d'au plus 10 ml/100 g.

2. Composition pesticide selon la revendication 1, laquelle comprend de plus un composé pesticide.

3. Composition pesticide selon la revendication 1, dans laquelle le support est une particule avec un diamètre de particule de 0,1 à 10 mm.

4. Composition pesticide selon l'une quelconque des revendication 1 à 3, dans laquelle le composé d'ester est mis sur le support dans la proportion de 0,001 à 5 parties en poids du composé d'ester par rapport à 100 parties en poids du support.

5. Composition pesticide selon l'une quelconque des revendications 1 à 3, dans laquelle le support est une substance inorganique.

6. Composition pesticide selon la revendication 5, dans laquelle la substance inorganique est du carbonate de calcium particulaire.

7. Composition pesticide selon la revendication 5, dans laquelle la substance inorganique est la silice.

8. Composition pesticide selon la revendication 1, dans laquelle le composé d'ester est le 3-(1-propényl)-2,2-diméthylcyclopropane-carboxylate de 2,3,5,6-tétrafluoro-4-méthoxyméthylbenzyle.

9. Composition pesticide emballée, dans laquelle la composition pesticide selon la revendication 1 est emballée dans un emballage présentant une surface intérieure constituée d'un film d'un copolymère d'éthylène-alcool vinylique ou de polyacrylonitrile.

10. Procédé pour le contrôle de parasites qui comprend l'application d'une quantité efficace de la composition pesticide selon la revendication 1 sur une zone à extérieur.

11. Procédé pour le contrôle de parasites selon la revendication 10, dans lequel la quantité d'application est de 1 à 150 g/1 m².
